# EUROPEAN PATENT SPECIFICATION

(11) **EP 1 817 376 B1**
(45) Date of publication and mention of the grant of the patent: **22.08.2012**
(21) Application number: 05819303.8
(22) Date of filing: 26.10.2005
(51) Int. Cl.: C08L 35/00, C08F 222/40

(54) **HYBRID THERMOSETTING COMPOSITION**
HITZEHÄRTBARE HYBRIDZUSAMMENSETZUNG
COMPOSITION HYBRIDE THERMODURCISSABLE

(30) Priority: 01.12.2004 US 1252
(43) Date of publication of application: 15.08.2007
(73) Proprietor: 3M Innovative Properties Company, St. Paul, MN 55133-3427 (US)
(72) Inventor: CHENG, Ming,, Saint Paul, MN 55133-3427 (US)
(74) Representative: Weinberger, Rudolf
(86) International application number: PCT/US2005/038986
(87) International publication number: WO 2006/060092

(56) References cited:
- EP-A- 0 688 798
- PATENT ABSTRACTS OF JAPAN vol. 1995, no. 01, 28 February 1995 (1995-02-28) & JP 06 293815 A (NIPPON SHOKUBAI CO LTD), 21 October 1994 (1994-10-21)
- PATENT ABSTRACTS OF JAPAN vol. 017, no. 647 (C-1135), 2 December 1993 (1993-12-02) & JP 05 209067 A (TORAY IND INC), 20 August 1993 (1993-08-20)

## Description

This invention relates to compositions comprising at least one thermosetting resin. In other aspects, this invention also relates to processes for preparing the compositions, to substrates bearing the compositions, and to articles comprising the compositions.

Epoxy resins are monomers or prepolymers that react with curing agents to yield high performance cured resins. The cured resins exhibit numerous desirable chemical and physical characteristics (for example, thermal and chemical resistance, adhesion retention, low shrinkage, abrasion resistance, and high dielectric strength) and are widely utilized (for example, in the construction and electronics industries) as protective coatings for electrical insulation, as composite matrix resins, and as structural adhesives.

Frequently, it is desired that the cured resins have a relatively high glass transition temperature (Tg), so as to be strong at relatively high temperatures. A common method of increasing the glass transition temperature is by introducing a high degree of crosslinking.

Cured resins having a high crosslink density have shortcomings, however. For example, such resins are typically very brittle (that is, not very tough or ductile). Also, especially if a high concentration of polar groups is utilized, the cured resin may not be satisfactorily stable to moisture.

Generally, to obtain a relatively tough cured resin, a high degree of cure is desirable, with a high percentage of epoxy resin having reacted to form extended chains within the polymer network. The resulting resins can exhibit a relatively low glass transition temperature, however, because of low crosslink density.

Another method of toughening epoxy resins involves the incorporation of thermoplastic toughening agents such as polyimides, so as to form epoxy-polyimide "hybrids." Polyimides are synthetic organic resins characterized by repeating imide linkages in the polymer chain. They are noted for their outstanding chemical and physical properties, particularly their high temperature oxidative stability and strength.

Due to high softening points and insolubility in organic solvents, however, most conventional polyimides (especially aromatic polyimides) are extremely difficult to process. Thus, when incorporated in amounts sufficient to maximize the toughness of the resulting hybrid composition, the viscosity of the composition can also increase, thereby reducing or eliminating hot-melt processability.

Thus, we recognize that there is a need for a curable epoxy resin composition that has a relatively low melt viscosity (to enable hot-melt processing) and that, upon curing, also exhibits significant toughness and/or a relatively high glass transition temperature (preferably, both). For applications in, for example, the electronics industry, good thermal stability and adhesion to a wide variety of substrates can also be desirable.

The present invention provides such a composition, which comprises
(a) at least one branched copolymer comprising the reaction product of
   (1) at least one ethylenically-unsaturated monomer,
   (2) at least one N-substituted maleimide monomer,
   (3) at least one crosslinker comprising at least two ethylenically-unsaturated functional groups,
   (4) at least one free radical initiator, and
   (5) at least one chain transfer agent, the mole ratio of crosslinker to chain transfer agent being less than about 1.25:1;
      and
(b) at least one thermosetting resin.
Preferably, the ethylenically-unsaturated monomer is a vinyl aromatic or vinyl ether monomer and/or the thermosetting resin is an epoxy resin.

As used herein, the term "branched" means that the reaction product number average molecular weight (Mₙ) determined by multi-angle laser light scattering (MALLS) is at least double (preferably, at least triple; more preferably, at least ten times) the reaction product number average molecular weight (Mₙ) determined by gel permeation chromatography (GPC). This reflects the size exclusion basis for GPC molecular weight determinations, in which, for a given molecular weight, a higher degree of branching appears to indicate a lower molecular weight.

It has been discovered that branched maleimide copolymers can be added to thermosetting resins to provide cured hybrids that exhibit enhanced physical properties. Surprisingly, the branched copolymers can be added in amounts sufficient to provide significant toughness, while maintaining a viscosity that is low enough to allow hot-melt processing. In addition, the cured hybrids can exhibit glass transition temperatures that enable use at relatively high temperatures.

Thus, at least some embodiments of the composition of the invention meet the above-stated need in the art for high performance, cured epoxy resins. The ability to toughen epoxy resins without sacrificing hardness and without lowering the glass transition temperature may facilitate an expansion of the use of epoxy resins in areas such as primary aircraft structures, molding compounds, and electrical and electronic components.

The composition of the invention can be processed in an essentially solvent-free manner, which can reduce or minimize worker exposure to organic vapors and significantly reduce the risk of fire and/or explosion. The solvent-free composition can also contribute significantly to compliance with stringent air quality standards.

Furthermore, with solvent-free processing (for example, hot-melt processing), residual solvent in the cured resin can be reduced or even eliminated. Residual solvent in structural adhesives can create bubbles in adhesive bonds (termed "popcorning"): Such popcoming can contribute to adhesive failure and/or to the corrosion of electronic components. Solvent-free processing reduces or eliminates the need for resource-consuming solvent removal steps.

In another aspect, this invention also provides a process for preparing the composition of the invention, which comprises
(a) providing at least one branched copolymer comprising the reaction product of
   (1) at least one ethylenically-unsaturated monomer,
   (2) at least one N-substituted maleimide monomer,
   (3) at least one crosslinker comprising at least two ethylenically-unsaturated functional groups,
   (4) at least one free radical initiator, and
   (5) at least one chain transfer agent, the mole ratio of crosslinker to chain transfer agent being less than about 1.25:1;
(b) providing at least one thermosetting resin;
(c) providing at least one curing agent;
(d) combining the branched copolymer and the thermosetting resin to form a mixture (preferably, a mixture that, upon visual inspection, appears to be homogeneous); and
(e) blending the curing agent into the mixture.
Optionally, the process can further comprise cooling the mixture to a temperature that is below the activation temperature of the curing agent.

### DETAILED DESCRIPTION

### Components of Branched Copolymer

### (1) Ethylenically-Unsaturated Monomer

Suitable monomers for use in preparing the branched copolymer include those that are ethylenically-unsaturated. Such monomers include substituted and unsubstituted olefins such as, for example, vinyl aromatics, vinyl ethers, vinyl esters, acryloyl- and methacryloyl-functional monomers, isobutene, and the like, and mixtures thereof. Preferred monomers include vinyl aromatics, vinyl ethers, and mixtures thereof.

A class of useful ethylenically-unsaturated monomers includes those represented by the following general Formula I: 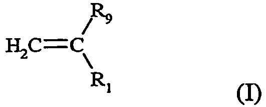 wherein:
-R₁ is 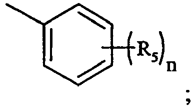 -OR₆;
   -C(O)OR₇;
   -OC(O)R₈;
   -C≡N; or
   -CH₃;
-R₉ is -H or -CH₃;
-R₅ is a halogen, -OH, -OR₁₀, or -C(O)OH;
-R₆, -R₇, -R₈, and -R₁₀ are monovalent aromatic groups, monovalent alicyclic groups, or monovalent C₁ to C₁₈ aliphatic groups; and
n is an integer of 0 to 5.

Preferably, -R₁ is 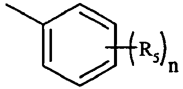 or -OR₆; and -R₉ is -H.

Representative examples of suitable monomers include cyclohexyl vinyl ether, methyl vinyl ether, ethyl vinyl ether, isopropyl vinyl ether, n-butyl vinyl ether, isobutyl vinyl ether, hexadecyl vinyl ether, n-octadecyl vinyl ether, methyl acrylate, ethyl acrylate, n-butyl acrylate, isobutyl acrylate, t-butyl acrylate, ethyl methacrylate, butyl methacrylate, ethyltriglycol methacrylate, isobornyl acrylate, 2-(((butylamino)carbonyl)oxy)ethyl acrylate, acetoacetoxyethyl methacrylate, acetoacetoxyethyl acrylate, acetoacetoxypropyl acrylate, acetoacetoxybutyl acrylate, 2-methyl-2-(3-oxo-butyrylamino)-propyl methacrylate, 2-ethylhexyl acrylate, decyl acrylate, lauryl acrylate, stearyl acrylate, 2-hydroxyethyl acrylate, 2-hydroxypropyl acrylate, 2-hydroxyethyl methacrylate, 2-hydroxypropyl methacrylate, β-ethoxyethyl acrylate, 2-cyanoethyl acrylate, cyclohexyl acrylate, diethyl aminoethyl acrylate, hexyl methacrylate, decyl methacrylate, lauryl methacrylate, stearyl methacrylate, phenylcarbitol acrylate, nonylphenyl carbitol acrylate, nonylphenoxy propyl acrylate, 2-phenoxyethyl methacrylate, 2-phenoxypropyl methacrylate, N-vinyl pyrrolidone, polycaprolactam acrylate, acryloyloxyethyl phthalate, acryloyloxy succinate, 2-ethylhexyl carbitol acrylate, ω-carboxy-polycaprolactam monoacrylate, phthalic acid monohydroxyethyl acrylate, vinyl acetate, vinyl trifluoroacetate, vinyl 2-ethylhexanoate, vinyl stearate, vinyl propionate, vinyl n-decanoate, vinyl benzoate, vinyl laurate, vinyl pivalate, vinyl behenate, styrene, 2,3,4,5,6-pentafluorostyrene, 2-chlorostyrene, 2-bromostyrene, 4-vinylbenzoic acid, 9-vinylanthracene, 2-vinylnaphthalene, 2,4,6-trimethylstyrene, 4-methoxystyrene, 4-vinylbiphenyl, vinyl toluenes, acrylonitrile, glycidyl methacrylate, n-methylol acrylamide-butyl ether, n-methylol acrylamide, acrylamide, dicyclopentenyloxyethyl acrylate, dicyclopentenyl acrylate, dicyclopentenyloxyethyl acrylate, acrylic acid, methacrylic acid, isobutene, and the like, and mixtures thereof.

Preferred monomers include cyclohexyl vinyl ether, methyl vinyl ether, ethyl vinyl ether, isopropyl vinyl ether, n-butyl vinyl ether, isobutyl vinyl ether, hexadecyl vinyl ether, n-octadecyl vinyl ether, styrene, 2,3,4,5,6-pentafluorostyrene, 2-chlorostyrene, 2-bromostyrene, 4-vinylbenzoic acid, 9-vinylanthracene, 2-vinylnaphthalene, 2,4,6-trimethylstyrene, 4-methoxystyrene, 4-vinylbiphenyl, 3-vinyl toluene, 4-vinyl toluene, and the like, and mixtures thereof. More preferred monomers include styrene, 3-vinyl toluene, 4-vinyl toluene, cyclohexyl vinyl ether, and the like, and mixtures thereof, with styrene, cyclohexyl vinyl ether, and the like, and mixtures thereof being most preferred.

### (2) N-Substituted Maleimide Monomer

Maleimide monomers suitable for use in preparing the branched copolymer include those that comprise a substituted or unsubstituted, nitrogen-bonded aryl group (preferably, C₆-C₁₄ aryl), cycloalkyl group (preferably, C₄-C₁₂ cycloalkyl), alkyl group (preferably, C₁-C₁₈ alkyl), or the like, or combinations thereof (preferably, an aryl or cycloalkyl group). Representative examples of useful maleimide monomers include N-phenylmaleimide, N-tolylmaleimide, N-cyclohexylmaleimide, N-methylmaleimide, N-ethylmaleimide, N-isopropylmaleimide, N-propylmaleimide, N-butylmaleimide, N-cyclopentylmaleimide, N-cyclobutylmaleimide, N-cycloheptylmaleimide, and the like, and mixtures thereof.

Preferred maleimide monomers include N-phenylmaleimide, N-cyclohexylmaleimide, N-methylmaleimide, and the like, and mixtures thereof.

### (3) Multifunctional Crosslinker

Compounds useful as crosslinkers in preparing the branched copolymer include those that comprise at least two ethylenically-unsaturated functional groups. Such compounds include multifunctional ethylenically unsaturated monomer(s) (compounds possessing at least two polymerizable double bonds in one molecule), for example, divinyl aromatics, divinyl ethers, multifunctional maleimides, multifunctional acrylates and methacrylates, and the like, and mixtures thereof. Preferred are divinyl aromatics, divinyl ethers, multifunctional maleimides, and the like, and mixtures thereof.

Representative examples of such multifunctional crosslinkers include divinylbenzene, 1,4-cyclohexanedimethanol divinyl ether, 1,1'-(methylenedi-4,1-phenylene)bismaleimide, ethylene glycol diacrylate; 1,2-propylene glycol diacrylate; 1,3-butylene glycol diacrylate; 1,6-hexanediol diacrylate; neopentylglycol diacrylate; trimethylolpropane triacrylate; polyoxyalkylene glycol diacrylates such as dipropylene glycol diacrylate, triethylene glycol diacrylates, tetraethylene glycol diacrylates, polyethylene glycol diacrylate; ethylene glycol dimethacrylate; 1,2-propylene glycol dimethacrylate; 1,3-butylene glycol dimethacrylate; 1,6-hexanediol dimethacrylate; neopentylglycol dimethacrylate; Bisphenol A dimethacrylate; diurethane dimethacrylate; trimethylolpropane trimethacrylate; polyoxyalkylene glycol dimethacrylates such as dipropylene glycol dimethacrylate, triethylene glycol dimethacrylates, tetraethylene glycol dimethacrylates, polyethylene glycol dimethacrylate; N,N-methylenebismethacrylamide; diallyl phthalate; triallyl cyanurate; triallyl isocyanurate; allyl acrylate; allyl methacrylate; diallyl fumarate; diallyl isophthalate; diallyl tetrabromophthalate; pentaerythritol tetraacrylate; di-trimethylpropane tetraacrylate; dipentaerythritol pentaacrylate; and the like; and mixtures thereof.

Preferred crosslinkers include divinylbenzene, 1,4-cyclohexanedimethanol divinyl ether, 1,1'-(methylenedi-4,1-phenylene)bismaleimide, and the like, and mixtures thereof.

### (4) Initiators

Initiators that are useful in preparing the branched copolymers are free radical initiators, which include those described in Chapters 20 & 21 of Macromolecules, Vol. 2, 2nd Ed., H. G. Elias, Plenum Press, New York (1984). Useful thermal initiators include, but are not limited to, the following: (1) azo compounds such as, for example, 2,2'-azobis(isobutyronitrile), dimethyl 2,2'-azo-bis(isobutyrate), azo-bis(diphenyl methane), and 4, 4'-azo-bis(4-cyanopentanoic acid); (2) peroxides such as, for example, hydrogen peroxide, benzoyl peroxide, cumyl peroxide, tert-butyl peroxide, cyclohexanone peroxide, glutaric acid peroxide, lauroyl peroxide, and methyl ethyl ketone peroxide; (3) hydroperoxides such as, for example, tert-butyl hydroperoxide and cumene hydroperoxide; (4) peracids such as, for example, peracetic acid, perbenzoic acid, potassium persulfate, and ammonium persulfate; (5) peresters such as, for example, diisopropyl percarbonate; (6) thermal redox initiators; and the like; and mixtures thereof.

Useful photochemical initiators include but are not limited to benzoin ethers such as, for example, diethoxyacetophenone; oximino-ketones; acylphosphine oxides; diaryl ketones such as, for example, benzophenone and 2-isopropyl thioxanthone; benzil and quinone derivatives; 3-ketocoumarins such as, for example, those described by S. P. Pappas, J. Rad. Cur., 7, 6 (1987), and photochemical redox initiators. Thermal initiators are generally preferred, with azo compounds and peroxides (even more preferably, azo compounds; most preferably, 2,2'-azo-bis(isobutyronitrile)) being more preferred.

### (5) Chain Transfer Agents

Branched copolymer molecular weight can be controlled through the use of chain transfer agents, including, for example, mercaptans, disulfides, carbon tetrabromide, carbon tetrachloride, and the like, and mixtures thereof. Useful chain transfer agents also include cobalt chelates, for example, those described in U.S. Patent Nos. 4,680,352 (Janowicz et al.) and 4,694,054 (Janowicz), and oligomeric chain transfer agents (such as, for example, those described in U.S. Patent Nos. 5,362,826 (Berge et al.), 5,773,534 (Antonelli et al.), and 6,635,690 (Heilmann et al.).

### Preparation of Branched Copolymer

Methods for preparing the branched copolymers of the invention include, for example, emulsion polymerization, suspension polymerization, and solution polymerization. These methods use free radical initiators (optionally, along with initiation accelerators) that, through various techniques, can be decomposed to form free radicals. Once in radical form, the initiators can react with the above-described monomers to thereby start the polymerization process.

Free radical initiators can be decomposed via homolytic bond cleavage by using heat energy (thermolysis), light energy (photolysis), or appropriate catalysts. Light energy can be supplied by means of visible or ultraviolet sources, including low intensity fluorescent black light lamps, medium pressure mercury arc lamps, and germicidal mercury lamps.

Catalyst-induced homolytic decomposition of the initiator typically involves an electron transfer mechanism resulting in a reduction-oxidation (redox) reaction. (This method of initiation is described, for example, by Elias in Macromolecules, supra). Initiators such as persulfates, peroxides, and hydroperoxides are generally more susceptible to this type of decomposition. Useful catalysts include, for example, amines, metal ions used in combination with peroxide or hydroperoxide initiators, and bisulfite or mercapto-based compounds used in combination with persulfate initiators.

Preferred methods of initiation comprise thermolysis or catalysis. More preferred is thermolysis, which has an additional advantage in that it provides ease of control of reaction rate and exotherm.

Emulsion polymerization techniques can be used to prepare the copolymers, if desired. Such techniques involve dispersion of the monomers, crosslinker, initiator, and chain transfer agent in a continuous phase (typically water) with the aid of a surfactant and initiation of polymerization. Other components can be present including stabilizers (for example, copolymerizable surfactants) and catalysts. The product of this type of polymerization is typically a colloidal dispersion of polymer particles that is often referred to as "latex."

The branched copolymers of the invention can also be made by suspension polymerization techniques. For example, colloidal silica in combination with a promoter (for example, an amphiphilic polymer) can be used as a stabilizer. Using such a process, surfactant-free copolymers can be obtained with a relatively narrow particle size distribution.

Bulk polymerization methods can also be used, but a preferred method for preparing the branched copolymers is by solution polymerization. In one illustrative solution polymerization method, the monomers, crosslinker, chain transfer agent, and one or more inert solvents can be charged into a reaction vessel. Suitable solvents include those that are capable of dissolving the monomers and/or the resulting copolymer. Preferably, the solvent is a polar organic solvent. After the monomers are charged, a free radical initiator (preferably, a thermal free radical initiator; more preferably, an azo or peroxide compound, for reasons of solubility and control of reaction rate) can be added. The vessel can be purged with nitrogen to create an inert atmosphere. The reaction can be allowed to proceed, preferably using elevated temperatures, to achieve a desired conversion of the monomers to copolymer.

Suitable solvents for solution polymerizations include but are not limited to esters (for example, ethyl acetate and butyl acetate); ketones (for example, methyl ethyl ketone and acetone); alcohols (for example, methanol and ethanol); aliphatic hydrocarbons (for example, hexane and heptane); aromatics (for example, toluene and chlorobenzene); alicyclics (for example, cyclohexane); ethers (for example, tetrahydrofuran and methyl tert-butyl ether); and the like; and mixtures thereof. The solvent, however, can be any substance that is liquid in a temperature range of, for example, about -10°C to 120°C, that does not interfere with the energy source or catalyst used to dissociate the initiator to form free radicals, that is inert to the reactants and product, and that will not otherwise adversely affect the reaction. The amount of solvent, when used, can generally be about 30 to 80 percent by weight, based on the total weight of the reactants and solvent. Preferably, the amount of solvent ranges from about 40% to 65% by weight, based upon the total weight of the reactants and solvent, to yield fast reaction times.

If desired, copolymers prepared by solution polymerization can optionally be inverted to yield dispersions of small average particle size (typically less than about one micrometer). Inversion of copolymers can occur in aqueous carrier or aqueous solvent provided that the copolymers either contain ionic functionality or contain acidic or basic functionality that upon neutralization yields ionic functionality.

In carrying out the preparation process, essentially any order and manner of combination of the components can be utilized, but the use of stirring (for example, mechanical stirring or high shear mixing) is generally preferred. Preferably, the components are combined at a temperature that is sufficiently low to minimize initiation.

The relative amounts of the monomers, crosslinker, chain transfer agent, and initiator (collectively termed the "monomer composition") can vary depending upon the desired properties of the product polymer. Generally, the monomer composition can comprise at least about 20 weight percent (preferably, at least about 30 weight percent; more preferably, at least about 40 weight percent) of one or more ethylenically-unsaturated monomers; at least about 40 weight percent (preferably, at least about 45 weight percent; more preferably, at least about 50 weight percent) of one or more N-substituted maleimide monomers; at least about 1 weight percent (preferably, at least about 2 weight percent; more preferably, at least about 3 weight percent) of one or more crosslinkers; at least about 1 weight percent (preferably, at least about 2 weight percent; more preferably, at least about 3 weight percent) of one or more free radical initiators; and at least about 1 weight percent (preferably, at least about 2 weight percent; more preferably, at least about 3 weight percent) of one or more chain transfer agents; based upon the total weight of the monomer composition.

Generally, the monomer composition can comprise up to about 50 weight percent (preferably, up to about 45 weight percent; more preferably, up to about 40 weight percent) of one or more ethylenically-unsaturated monomers; up to about 70 weight percent (preferably, up to about 60 weight percent; more preferably, up to about 50 weight percent) of one or more N-substituted maleimide monomers; up to about 15 weight percent (preferably, up to about 5 weight percent; more preferably, up to about 3 weight percent) of one or more crosslinkers; up to about 15 weight percent (preferably, up to about 10 weight percent; more preferably, up to about 3 weight percent) of one or more free radical initiators; and up to about 20 weight percent (preferably, up to about 10 weight percent; more preferably, up to about 3 weight percent) of one or more chain transfer agents; based upon the total weight of the monomer composition.

Thus, the monomer composition can comprise, for example, from about 20 to about 40 weight percent, from about 20 to about 45 weight percent, from about 20 to about 50 weight percent, from about 30 to about 40 weight percent, from about 30 to about 45 weight percent, from about 30 to about 50 weight percent, from about 40 to about 45 weight percent, or from about 40 to about 50 weight percent, ethylenically-unsaturated monomer (and ranges of amounts of the other four components that are similarly compiled from the above-listed lower and upper limits for these components).

Preferably, the amount of crosslinker is chosen to be sufficiently high (relative to the amounts of the monomers) to provide non-linear polymer and is counterbalanced by an amount of chain transfer agent that is empirically determined to be sufficient to prevent gellation. The mole ratio of crosslinker to chain transfer agent is less than about 125.

The copolymer can be isolated, for example, by solvent evaporation or by precipitation (for example, by pouring the reaction mixture into a liquid in which the copolymer is substantially insoluble such as, for example, methanol or isopropanol) followed by filtration of the solid copolymer. Residual volatile components can be removed by application of heat or vacuum.

### Thermosetting Resins

Resins suitable for use in preparing the composition of the invention include thermosetting resins. Such resins can be cured by exposure to heat or radiation to form a glassy network polymer. Suitable resins include, for example, epoxy resins, curable imide resins (especially maleimide resins, but also including, for example, commercial K-3 polyimides (available from E. I. du Pont de Nemours and Company) and polyimides having a terminal reactive group such as acetylene, diacetylene, phenylethynyl, norbornene, nadimide, or benzocyclobutane), vinyl ester resins and acrylic resins (for example, (meth)acrylic esters or amides of polyols, epoxies, and amines), bisbenzocyclobutane resins, polycyanate ester resins, and the like, and mixtures thereof. The resins can be utilized in the form of either monomers or prepolymers. Preferred resins include epoxy resins, maleimide resins, polycyanate ester resins, and the like, and mixtures thereof. Epoxy resins are especially preferred due to their processing characteristics, high temperature properties, and environmental resistance.

Epoxy resins that are useful in preparing the composition of the invention include, for example, substituted or unsubstituted aliphatic, alicyclic, aromatic, and/or heterocyclic polyepoxides, such as glycidyl esters, glycidyl ethers, glycidyl amines, or epoxidized olefins. The polyepoxides can be substituted, for example, with moieties such as halogen, hydroxyl, and/or other groups that do not significantly interfere with cationic cure.

Suitable epoxides include monomeric epoxy compounds and epoxides of the oligomeric type. These materials generally have, on the average, at least 1 polymerizable epoxy group per molecule (preferably, at least about 1.5 and, more preferably, at least about 2). The oligomeric epoxides include linear oligomers having terminal epoxy groups (for example, a diglycidyl ether of a polyoxyalkylene glycol), oligomers having skeletal epoxy units (for example, polybutadiene polyepoxide), and oligomers having pendant epoxy groups (for example, a glycidyl methacrylate oligomer or co-oligomer).

The epoxides can be pure compounds or can be mixtures of compounds containing one, two, or more epoxy groups per molecule. These epoxy-containing materials can vary greatly in the nature of their backbone and substituent groups. For example, the backbone can be of any type, and substituent groups thereon can be any group that does not substantially interfere with cationic cure at room temperature. Illustrative of permissible substituent groups include halogens, ester groups, ethers, sulfonate groups, siloxane groups, nitro groups, phosphate groups, and the like. The molecular weight of the epoxy-containing materials can vary from about 58 to about 500 or more.

Useful epoxy-containing materials include those which contain cyclohexene oxide groups such as epoxycyclohexanecarboxylates, typified by 3,4-epoxycyclohexylmethyl-3,4-epoxycyclohexanecarboxylate, 3,4-epoxy-2-methylcyclohexylmethyl-3,4-epoxy-2-methylcyclohexane carboxylate, and bis(3,4-epoxy-6-methylcyclohexylmethyl) adipate. A more detailed list of useful epoxides of this nature is set forth in U.S. Patent No. 3,117,099.

Other epoxy-containing materials that are useful include glycidyl ether monomers of the formula 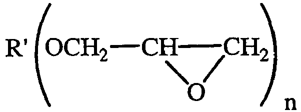 where R' is alkyl or aryl and n is an integer of 1 to 6. Examples are glycidyl ethers of polyhydric phenols obtained by reacting a polyhydric phenol with an excess of a chlorohydrin such as epichlorohydrin (for example, the diglycidyl ether of 2,2-bis-(2,3-epoxypropoxyphenol)-propane). Additional examples of epoxides of this type are described in U.S. Patent No. 3,018,262, and in Handbook of Epoxy Resins, Lee and Neville, McGraw-Hill Book Co., New York (1967).

A number of commercially available epoxy monomers can be used. Epoxides that are readily available include, but are not limited to, octadecylene oxide; epichlorohydrin; styrene oxide; vinylcyclohexene oxide; glycidol; glycidyl methacrylate; diglycidyl ether of bisphenol A (for example, those available under the trade designations "EPON 815C", "EPON 813", "EPON 828", "EPON 1004F", and "EPON 1001F" from Resolution Performance Products, Houston, TX); and diglycidyl ether of bisphenol F (for example, those available under the trade designations "ARALDITE GY281" from Ciba Specialty Chemicals Holding Company, Basel, Switzerland, and "EPON 862" from Resolution Performance Products).

Other exemplary epoxy monomers include vinyl cyclohexene dioxide (available from SPI Supplies, West Chester, PA); 4-vinyl-1-cylcohexene diepoxide (available from Aldrich Chemical Co., Milwaukee, WI); 3,4-epoxycyclohexylmethyl-3,4-epoxycyclohexene carboxylate (for example, one available under the trade designation "CYRACURE UVR-6110" from Dow Chemical Co.); 3,4-epoxy-6-methylcylcohexylmethyl-3,4-epoxy-6-methyl-cylcohexane carboxylate; 2-(3,4-epoxycyclohexyl-5,5-spiro-3,4-epoxy) cyclohexane-metadioxane; bis(3,4-epoxycyclohexylmethyl) adipate (for example, one available under the trade designation "CYRACURE UVR-6128" from Dow Chemical Co.); bis(3,4-epoxy-6-methylclyclohexylmethyl)adipate; 3,4-epoxy-6-methylcyclohexane carboxylate; and dipentene dioxide.

Still other exemplary epoxy monomers include epoxidized polybutadiene (for example, one available under the trade designation "POLY BD 605E"from Sartomer Co., Inc., Exton, PA); epoxy silanes (for example, 3,4-epoxycylclohexylethyltrimethoxysilane and 3-glycidoxypropyltrimethoxysilane, commercially available from Aldrich Chemical Co., Milwaukee, WI); flame retardant epoxy monomers (for example, one available under the trade designation "DER-542", a brominated bisphenol type epoxy monomer available from Dow Chemical Co., Midland, MI); 1,4-butanediol diglycidyl ether (for example, one available under the trade designation "ARALDITE RD-2" from Ciba Specialty Chemicals); hydrogenated bisphenol A-epichlorohydrin based epoxy monomers (for example, one available under the trade designation "EPONEX 1510" from Resolution Performance Products); polyglycidyl ether of phenol-formaldehyde novolak (for example, one available under the trade designation "DEN-431" and "DEN-438" from Dow Chemical Co.); and epoxidized vegetable oils such as epoxidized linseed and soybean oils available under the trade designations "VIKOLOX" and "VIKOFLEX" from Atofina Chemicals (Philadelphia, PA).

Additional suitable epoxy monomers include alkyl glycidyl ethers commercially available from Resolution Performance Products (Houston, TX) under the trade designation "HELOXY". Exemplary monomers include "HELOXY MODFIER 7" (a C₈-C₁₀ alky glycidyl ether), "HELOXY MODIFIER 8" (a C₁₂-C₁₄ alkyl glycidyl ether), "HELOXY MODIFIER 61" (butyl glycidyl ether), "HELOXY MODIFER 62" (cresyl glycidyl ether), "HELOXY MODIFER 65" (p-tert-butylphenyl glycidyl ether), "HELOXY MODIFER 67" (diglycidyl ether of 1,4-butanediol), "HELOXY 68" (diglycidyl ether of neopentyl glycol), "HELOXY MODIFER 107" (diglycidyl ether of cyclohexanedimethanol), "TELOXY MODIFER 44" (trimethylol ethane triglycidyl ether), "HELOXY MODIFIER 48" (trimethylol propane triglycidyl ether), "HELOXY MODIFER 84" (polyglycidyl ether of an aliphatic polyol), and "HELOXY MODIFER 32" (polyglycol diepoxide).

Other useful epoxy resins comprise copolymers of acrylic acid esters of glycidol (such as glycidyl acrylate and glycidyl methacrylate) with one or more copolymerizable vinyl compounds. Examples of such copolymers are 1:1 styrene-glycidyl methacrylate and 1:1 methyl methacrylate-glycidyl acrylate. Other useful epoxy resins are well known and contain such epoxides as epichlorohydrins, alkylene oxides (for example, propylene oxide), styrene oxide, alkenyl oxides (for example, butadiene oxide), and glycidyl esters (for example, ethyl glycidate).

Useful epoxy-functional polymers include epoxy-functional silicones such as those described in U.S. Patent No. 4,279,717 (Eckberg et al.), which are commercially available from the General Electric Company. These are polydimethylsiloxanes in which 1-20 mole % of the silicon atoms have been substituted with epoxyalkyl groups (preferably, epoxy cyclohexylethyl, as described in U.S. Patent No. 5,753,346 (Leir et al.).

Blends of various epoxy-containing materials can also be utilized. Such blends can comprise two or more weight average molecular weight distributions of epoxy-containing compounds (such as low molecular weight (below 200), intermediate molecular weight (about 200 to 1000), and higher molecular weight (above about 1000)). Alternatively or additionally, the epoxy resin can contain a blend of epoxy-containing materials having different chemical natures (such as aliphatic and aromatic) or functionalities (such as polar and non-polar). Other cationically-reactive polymers (such as vinyl ethers and the like) can additionally be incorporated, if desired. Preferred epoxies include aromatic glycidyl epoxies (such as the EPON resins available from Resolution Performance Products), cycloaliphatic epoxies (such as CYRACURE UVR-6110 and CYRACURE UVR-6128 available from Dow Chemical Company), and the like, and mixtures thereof.

Maleimide resins suitable for use in the composition of the invention include bismaleimides, polymaleimides, and polyaminobismaleimides. Such maleimides can be conveniently synthesized by combining maleic anhydride or substituted maleic anhydrides with di- or polyamine(s). Preferred are N,N'-bismaleimides, which can be prepared, for example, by the methods described in U.S. Patent Nos. 3,562,223 (Bargain et al.), 3,627,780 (Bonnard et al.), 3,839,358 (Bargain), and 4,468,497 (Beckley et al.) and many of which are commercially available.

Representative examples of suitable N,N'-bismaleimides include the N,N'-bismaleimides of 1,2-ethanediamine, 1,6-hexanediamine, trimethyl-1,6-hexanediamine, 1,4-benzenediamine, 4,4'-methylenebisbenzenamine, 2-methyl-1,4-benzenediamine, 3,3'-methylenebisbenzenamine, 3,3'-sulfonylbisbenzenamine, 4,4'-sulfonylbisbenzenamine, 3,3'-oxybisbenzenamine, 4,4'-oxybisbenzenamine, 4,4'-methylenebiscyclohexanamine, 1,3-benzenedimethanamine, 1,4-benzenediinethanamine, 4,4'-cyclohexanebisbenzenamine, and the like, and mixtures thereof.

Co-reactants for use with the bismaleimides can include any of a wide variety of unsaturated organic compounds, particularly those having multiple unsaturation, either ethylenic, acetylenic, or both. Examples include acrylic acids and amides and the ester derivatives thereof, for example, acrylic acid, methacrylic acid, acrylamide, methacrylamide, and methylmethacrylate; dicyanoethylene; tetracyanoethylene; allyl alcohol; 2,2'-diallylbisphenol A; 2,2'-dipropenylbisphenol A; diallylphthalate; triallylisocyanurate; triallylcyanurate; N-vinyl-2-pyrrolidinone; N-vinyl caprolactam; ethylene glycol dimethacrylate; diethylene glycol dimethacrylate; trimethylolpropane triacrylate; trimethylolpropane trimethacrylate; pentaerythritol tetramethacrylate; 4-allyl-2-methoxyphenol; triallyl trimellitate; divinyl benzene; dicyclopentadienyl acrylate; dicyclopentadienyloxyethyl acrylate; 1,4-butanediol divinyl ether; 1,4-dihydroxy-2-butene; styrene; α-methyl styrene; chlorostyrene; p-phenylstyrene; p-methylstyrene; t-butylstyrene; phenyl vinyl ether; and the like; and mixtures thereof. Of particular interest are resin systems employing a bismaleimide in combination with a bis(alkenylphenol). Descriptions of a typical resin system of this type can be found in U.S. Patent No. 4,100,140 (Zahir et al.). Particularly preferred components are 4,4'-bismaleimidodiphenylmethane and o,o'-diallyl bisphenol A.

Polycyanate ester resins suitable for use in the composition of the invention can be prepared by combining cyanogen chloride or bromide with an alcohol or phenol. The preparation of such resins and their use in polycyclotrimerization to produce polycyanurates are described in U.S. Patent No. 4,157,360 (Chung et al.). Representative examples of suitable polycyanate ester resins include 1,2-dicyanatobenzene, 1,3-dicyanatobenzene, 1,4-dicyanatobenzene, 2,2'-dicyanatodiphenylmethane, 3,3'-dicyanatodiphenylmethane, 4,4'-dicyanatodiphenylmethane, and the dicyanates prepared from biphenol A, bisphenol F, and bisphenol S, and the like, and mixtures thereof. Triand higher functionality cyanate resins are also suitable.

The thermosetting resins used in the composition of the invention are preferably ionically clean in that they are substantially free of ionic species. Removal of residual ionic halogens can be accomplished by reacting the resin with potassium hydroxide, sodium hydroxide, or any other suitable base.

When using an anhydride curing agent, it can be preferable to use a purified resin to enhance thermal stability. Such purification involves the removal of impurities such as higher molecular weight oligomers containing hydroxyl groups.

### Preparation of Hybrid Composition

The composition of the invention can be prepared by combining at least one branched copolymer and at least one thermosetting resin (optionally, with stirring or agitation). Preferably, the resulting mixture is substantially homogeneous (that is, the mixture appears to the human eye to be relatively transparent or clear). Solvent can be used, if desired, provided that the solvent is chosen so as to not react appreciably with the components of the composition. Suitable solvents include, for example, acetone, dichloromethane, and acetonitrile.

Preferably, little or no solvent is utilized. Solventless compositions can be prepared by simply dissolving the branched copolymer in the resin with or without the use of mild heating to facilitate dissolution. In a preferred method of forming the composition of the invention, the branched copolymer is combined with the resin in a solvent-free process, wherein the copolymer is mixed with the resin and the resultant mixture is both heated and stirred until a substantially homogeneous mixture is formed.

The branched copolymer can generally be included in the composition in a concentration of about 5 to about 60 weight percent, based upon the total weight of the copolymer and the thermosetting resin. Preferably, the copolymer is present in a concentration of about 15 to about 40 weight percent, based upon the total weight of the copolymer and the thermosetting resin.

The composition can further comprise additives such as curing agents, cure accelerators, catalysts, crosslinking agents, dyes, flame retardants, pigments, impact modifiers (for example, rubbers or thermoplastics), and flow control agents. Epoxy resins can be cured by a variety of curing agents, some of which are described (along with a method for calculating the amounts to be used) by Lee and Neville in Handbook of Epoxy Resins, McGraw-Hill, pages 36-140, New York (1967). Useful epoxy resin curing agents include polyamines such as ethylenediamine, diethylenetriamine, aminoethylethanolamine, and the like, diaminodiphenylsulfone, 9,9-bis(4-aminophenyl)fluorene, 9,9-bis(3-chloro-4-(aminophenyl)fluorene; hydrazides such as isophthalic dihydrazide; amides such as dicyandiamide; polycarboxylic acids such as adipic acid; acid anhydrides such as phthalic anhydride and chlorendic anhydride; and polyphenols such as bisphenol A, and the like. Generally, the epoxy resin and curing agent are used in stoichiometric amounts, but the curing agent can be used in amounts ranging from about 0.1 to 1.7 times the stoichiometric amount of epoxy resin.

Epoxy curing agents also include catalysts (for example, Lewis acids and bases; tertiary amines; thermal cationic catalysts including Brφnsted acids; anionic catalysts including imidazoles such as 4,5-diphenylimidazole; complexed Lewis acids; and photocatalysts including organometallic compounds and salts). Thermally-activated catalysts can generally be used in amounts ranging from about 0.05 to about 5 percent by weight, based upon the amount of epoxy resin present in the composition.

N,N'-bismaleimide resins can be cured using diamine curing agents, for example, such as those described in U.S. Patent No. 3,562,223 (Bargain et al.). Generally, from about 0.2 to about 0.8 moles of diamine can be used per mole of N,N'-bismaleimide. N,N'-bismaleimides can also cure by other mechanisms, for example, co-cure with aromatic olefins (such as bis-allylphenyl ether, 4,4'-bis(o-propenylphenoxy)benzophenone, o,o'-diallyl bisphenol A, and the like) or thermal cure via a self-polymerization mechanism.

Polycyanate resins can be cyclotrimerized by application of heat and/or by using catalysts such as zinc octoate, tin octoate, zinc stearate, tin stearate, copper acetylacetonate, and chelates of iron, cobalt, zinc, copper, manganese, and titanium with bidentate ligands such as catechol. Such catalysts can generally be used in amounts of from about 0.001 to about 10 parts by weight per 100 parts of polycyanate ester resin.

Preferably, at least one thermally- or photolytically-activatable curing agent is included in the composition of the invention in order to facilitate low temperature processing. Such curing agents are preferably incorporated into the composition at temperatures lower than the activation temperature of the curing agents. Preferred curing agents include anhydride curing agents, hydrazide curing agents, thermal cationic catalysts, or anionic catalysts (especially imidazoles) or photocatalysts. Most preferred curing agents include hydrazide curing agents and imidazole curing agents.

In a preferred method, the composition of the invention is formed by dissolving the branched copolymer in the resin at elevated temperatures (for example, temperatures sufficient to form a substantially homogeneous mixture or solution) and then cooling the resulting solution to a temperature below the activation temperature of the curing agent. The curing agent can then be blended into the solution. In preferred methods, the copolymer is dissolved in the resin at a temperature greater than about 120°C, with subsequent cooling to below about 120°C (preferably, below about 100°C) to add the curing agent.

The composition of the invention can be coated on a substrate, if desired, by any of a variety of coating methods known to those skilled in the art (including, for example, knife coating and spin coating). The substrate can be chosen from a wide variety of films, sheets, and other surfaces, depending upon the particular application. Useful substrates include polymer films (for example, polyethylene terephthalate or polyimide films), metal films or foils (for example, of copper or aluminum), semiconductors (for example, silicon wafers), glass, ceramic, woven or non-woven fabrics, and the like, and combinations thereof. For applications where coating is less desirable, the composition can alternatively be cured in bulk form.

Solvent-free application of the composition is preferred and can be accomplished by melting the composition at a temperature below the activation temperature of any curing agent that is present and applying the composition to a substrate. Such "hot-melt coating" can be carried out using, for example, die coating or knife coating techniques.

The composition of the invention is thermosettable. A "thermosettable" or "thermosetting" composition is one that can be cured (that is, crosslinked) by exposure to, for example, thermal radiation (or heat), actinic radiation, moisture, or other means (preferably, thermal radiation), to yield a substantially infusible (that is, thermoset) material. Combinations of various curing means can also be used (for example, a combination of heat and actinic radiation).

The composition of the invention is particularly useful in applications that require heat resistance (for example, use as laminating adhesives; underflow adhesives such as flip chip adhesives, including no-flow underfill adhesives, capillary underfill adhesives, and wafer-applied underfill adhesives; anisotropic conductive adhesives; covercoats; and encapsulants for electronic components in the electronics industry). For use in, for example, the electronics industry, it can be desirable to enhance the structural integrity and electrical conductivity of the composition. Additives such as, for example, reinforcing fillers (including silica, calcium carbonate, barium sulfate, glass beads, and the like) can be used to increase structural integrity. Fillers to increase electrical conductivity include metallic powders (for example, silver, copper, and aluminum powders, and the like), metal-coated glass beads, mineral fillers, and any other electrically conductive component that can be used as a filler in electrically conductive materials. Preferred additives include silica, electrically conductive particles, and mixtures thereof.

The composition of the invention is particularly useful for encapsulating solid-state electronic components such as integrated circuits, light emitting diodes (LEDs), and the like. The composition is also particularly well-suited for use as underflow adhesives in the construction of, for example, integrated circuits.

### Examples

Objects and advantages of this invention are further illustrated by the following examples, but the particular materials and amounts thereof recited in these examples, as well as other conditions and details, should not be construed to unduly limit this invention.

Unless otherwise noted, all chemicals, solvents, and reagents were or can be obtained from Aldrich Chemical Co., Milwaukee, WI.

### Glossary

As used herein,
"AIBN" refers to 2,2'-azo-bis(isobutyronitrile);
"DPI" refers to 4,5-diphenylimidazole;
"BISMALEIMIDE" refers to 1,1'-(methylenedi-4,1-phenylene)bismaleimide;
"EPON 828" refers to a Bisphenol A epoxy resin available from Resolution Performance Products, Houston, TX;
"RSL 1462" refers to an epichlorohydrin epoxy resin available from Resolution Performance Products, Houston, TX;
"IPDH" refers to isophthalic dihydrazide, available from TCI America, Portland, OR; and
"LM-10" refers to fumed silica obtained from Nippon Chemical Co., Tokyo, Japan.

### Molecular Weight Determination

The number average and weight average molecular weights of each of the polymers of Examples 1-5 and Comparative Example 1 were measured using both gel permeation chromatography (GPC) and multi-angle laser light scattering (MALLS).

Molecular weight measurements by GPC were made by eluting a tetrahydrofuran solution of each polymer sample through GPC columns with tetrahydrofuran at a flow rate of 1 mL per minute using a Model 1515 isocratic high performance liquid chromatography pump (available from Waters Corp., Milford, MA) and a Model 2410 refractive index detector (available from Waters Corp., Milford, MA). The GPC columns and detector were calibrated by using monodisperse polystyrene standards.

Molecular weight measurements by MALLS were made by eluting a 1 mL tetrahydrofuran solution of each polymer sample through mixed bed and 500 Angstrom high performance liquid chromatography (HPLC) columns (available from Jordi FLP, Bellingham, MA) using a Model 2695 Alliance injector and pump system (available from Waters Corp., Milford, MA) and a Model DAWN EOS light scattering detector, available from Wyatt Technology Corp., Santa Barbara, CA.

The molecular weight and glass transition temperature data for each of the polymers of Examples 1-5 and Comparative Example 1 are given in Table 1. In Table 1, "Mₙ" refers to the number average molecular weight, "M_{w}" refers to the weight average molecular weight, "PDI" refers to the polydispersity index, which is the ratio of the weight average molecular weight to the number average molecular weight, and "Tg" refers to the glass transition temperature of the polymer. In Table 1, "n/a" means that the data was not obtained.

### Glass Transition Temperature Determination

Glass transition temperature measurements were made using a Model Q 1000 differential scanning calorimeter (available from TA Instruments, New Castle, DE) with all polymer samples sealed in crimped aluminum pans. The rate of heating of the samples was 10°C per minute.

### Complex Viscosity Determination

Dynamic mechanical analysis (DMA) was carried out using a Dynamic Mechanical Analyzer RDAII obtained from Rheometric Scientific, Inc., Piscataway, New Jersey, on samples that had been pressed into sheets each having a thickness of approximately 1 millimeter and then cut into circles each having a diameter of approximately 1 inch.

### Polymer Number 1

### Preparation of a Branched Polymer of Styrene, Divinylbenzene, and N-Phenylmaleimide

A mixture of styrene (9.0 g), divinylbenzene (1.41g), N-phenylmaleimide (18.71 g), 1-octadecanethiol (6.19 g), AIBN (3.55 g), and methyl ethyl ketone (220 g), having a molar ratio of divinylbenzene to 1-octadecanethiol of 0.5 to 1, was stirred in a round bottom flask at room temperature. Nitrogen gas was bubbled through the stirring mixture for 15 minutes. The mixture was then stirred and heated to 64°C under a nitrogen atmosphere for 10 hours, after which time it was allowed to cool to room temperature. The mixture was poured into methanol (600 mL) in a beaker. The resultant precipitate was vacuum filtered using a fritted glass funnel. The filtered solid product was washed with methanol and was then dried in a vacuum oven at room temperature and approximately 1 mm Hg to afford the dry product. The polymer molecular weight and Tg data are given in Table 1.

### Polymer Number 2

### Preparation of a Branched Polymer of Styrene, Divinylbenzene, and N-Phenylmaleimide

A mixture of styrene (8.0 g), divinylbenzene (1.25 g), N-phenylmaleimide (16.60 g), 1-octadecanethiol (2.8 g), AIBN (1.58 g), and methyl ethyl ketone (172 g), having a molar ratio of divinylbenzene to 1-octadecanethiol of 1 to 1, was stirred in a round bottom flask at room temperature. Nitrogen gas was bubbled through the stirring mixture for 15 minutes. The mixture was then stirred and heated to 64°C under a nitrogen atmosphere for 10 hours, after which time it was allowed to cool to room temperature. The mixture was poured into methanol (600 mL) in a beaker. The resultant precipitate was vacuum filtered using a fritted glass funnel. The filtered solid product was washed with methanol and was then dried in a vacuum oven at room temperature and approximately 1 mm Hg to afford the dry product. The polymer molecular weight and Tg data are given in Table 1.

### Polymer Number 3

### Preparation of a Branched Polymer of Styrene, Divinylbenzene, N-Phenylmaleimide, and Glycidyl Methacrylate

A mixture of styrene (8.0 g), divinylbenzene (1.43 g), N-phenylmaleimide (19.0 g), glycidyl methacrylate (1.56 g), 1-octadecanethiol (6.29 g), AIBN (3.6 g), and methyl ethyl ketone (226 g), having a molar ratio of divinylbenzene to 1-octadecanethiol of 0.5 to 1, was stirred in a round bottom flask at room temperature. Nitrogen gas was bubbled through the stirring mixture for 15 minutes. The mixture was then stirred and heated to 64°C under a nitrogen atmosphere for 10 hours, after which time it was allowed to cool to room temperature. The mixture was poured into methanol (600 mL) in a beaker. The resultant precipitate was vacuum filtered using a fritted glass funnel. The filtered solid product was washed with methanol and was then dried in a vacuum oven at room temperature and approximately 1 mm Hg to afford the dry product. The polymer molecular weight and Tg data are given in Table 1.

### Comparative Polymer Number 1

### Preparation of a Linear Polymer of Styrene and N-Phenylmaleimide

A mixture of styrene (11.25 g), N-phenylmaleimide (18.71 g), 1-octadecanethiol (6.19 g), AIBN (3.55 g), and methyl ethyl ketone (220 g) was stirred in a round bottom flask at room temperature. Nitrogen gas was bubbled through the stirring mixture for 15 minutes. The mixture was then stirred and heated to 64°C under a nitrogen atmosphere for 10 hours, after which time it was allowed to cool to room temperature. The mixture was poured into methanol (600 mL) in a beaker. The resultant precipitate was vacuum filtered using a fritted glass funnel. The filtered solid product was washed with methanol and was then dried in a vacuum oven at room temperature and approximately 1 mm Hg to afford the dry product. The polymer molecular weight and Tg data are given in Table 1.

**Table 1. Molecular Weight and Glass Transition Temperature (Tg) Data**

| | **GPC Molecular Weight** | | | **MALLS Molecular Weight** | | | |
|---|---|---|---|---|---|---|---|
| **Polymer Number** | **Mₙ** | **M_{w}** | **PDI** | **Mₙ** | **M_{w}** | **PDI** | **T_{g} (°C)** |
| **Comparative 1** | 16,300 | 57,400 | 3.53 | 22,800 | 42,400 | 1.86 | 210 |
| **1** | 8,110 | 21,100 | 2.60 | 26,800 | 82,000 | 3.06 | 194 |
| **2** | 12,500 | 89,200 | 7.15 | 250,000 | 1,170,000 | 4.66 | 193 |
| **3** | 6,110 | 19,900 | 3.26 | 506,000 | 1,070,000 | 2.12 | 199 |

### Example 1

### Preparation of an Epoxy Blend

A mixture of 20 weight percent of Polymer Number 1 and 80 weight percent of RSL 1462 was prepared by heating and stirring the combined materials at 150°C for 30 minutes. The mixture (7.03 g; 29 parts by weight), IPDH (1.47 g; 6 parts by weight), and LM-10 (15.77 g; 65 parts by weight) were then mixed at 85°C using a Model DAC-100 mixer (available from Dantco Mixers Corporation, Paterson, New Jersey). DMA measurements were carried out as described above. The DMA data are shown in Table 2.

**Table 2. DMA Data for Example 1**

| **Temperature (°C)** | **Complex Viscosity (Pa·s)** |
|---|---|
| 25.4 | 24,300 |
| 50.6 | 2,730 |
| 75.5 | 275 |
| 101.2 | 10.3 |

### Comparative Example 1

### Preparation of an Epoxy Blend

A mixture of 20 weight percent of Comparative Polymer Number 1 and 80 weight percent of RSL 1462 was prepared by heating and stirring the combined materials at 150°C for 30 minutes. The mixture (5.13 g; 29 parts by weight), IPDH (1.07 g; 6 parts by weight), and LM-10 (11.51 g; 65 parts by weight) were then mixed at 85°C using a Model DAC-100 mixer (available from Dantco Mixers Corporation, Paterson, New Jersey). DMA measurements were carried out as described above. The DMA data are shown in Table 3.

**Table 3. DMA Data for Comparative Example 1**

| **Temperature (°C)** | **Complex Viscosity (Pa·s)** |
|---|---|
| 25.9 | 4,210,000 |
| 49.8 | 1,440,000 |
| 75.6 | 346,000 |
| 101.4 | 55,700 |

### Example 2

### Preparation of an Epoxy Blend

A mixture of 20 weight percent of Polymer Number 2 and 80 weight percent of RSL 1462 was prepared by heating and stirring the combined materials at 150°C for 30 minutes. The mixture (7.24 g; 29 parts by weight), IPDH (1.86 g; 6 parts by weight), and LM-10 (16.72 g; 65 parts by weight) were then mixed at 85°C using a Model DAC-100 mixer (available from Dantco Mixers Corporation, Paterson, New Jersey). DMA measurements were carried out as described above. The DMA data are shown in Table 4.

**Table 4. DMA Data for Example 2**

| **Temperature (°C)** | **Complex Viscosity (Pa·s)** |
|---|---|
| 25.2 | 27,100 |
| 49.6 | 2,010 |
| 74.8 | 290 |
| 101.1 | 123 |

### Example 3

### Preparation of an Epoxy Blend

A mixture of 20 weight percent of Polymer Number 1 and 80 weight percent of EPON 828 was prepared by heating and stirring the combined materials at 150°C for 30 minutes. The mixture (5.00 g; 30 parts by weight), DPI (1.03 g; 5 parts by weight), and LM-10 (11.20 g; 65 parts by weight) were then mixed at 85°C using a Model DAC-100 mixer (available from Dantco Mixers Corporation, Paterson, New Jersey). DMA measurements were carried out as described above. The DMA data are shown in Table 5.

**Table 5. DMA Data for Example 3**

| **Temperature (°C)** | **Complex Viscosity (Pa·s)** |
|---|---|
| 25.2 | 963 |
| 49.6 | 49.7 |
| 74.8 | 3.32 |
| 101.1 | 1.03 |

### Example 4

### Preparation of an Epoxy Blend

A mixture of 20 weight percent of Polymer Number 2 and 80 weight percent of EPON 828 was prepared by heating and stirring the combined materials at 150°C for 30 minutes. The mixture (1.25 g; 30 parts by weight), DPI (0.26 g; 5 parts by weight), and LM-10 (2.80 g; 65 parts by weight) were then mixed at 85°C using a Model DAC-100 mixer (available from Dantco Mixers Corporation, Paterson, New Jersey). DMA measurements were carried out as described above. The DMA data are shown in Table 6.

**Table 6. DMA Data for Example 4**

| **Temperature (°C)** | **Complex Viscosity (Pa·s)** |
|---|---|
| 25.6 | 9,930 |
| 49.8 | 460 |
| 74.9 | 28.3 |
| 101.1 | 3.65 |

### Comparative Example 2

### Preparation of an Epoxy Blend

A mixture of 20 weight percent of Comparative Polymer Number 1 and 80 weight percent of EPON 828 was prepared by heating and stirring the combined materials at 150°C for 30 minutes. The mixture (5.08 g; 30 parts by weight), DPI (1.03 g; 5 parts by weight), and LM-10 (11.20 g; 65 parts by weight) were then mixed at 85°C using a Model DAC-100 mixer (available from Dantco Mixers Corporation, Paterson, New Jersey). DMA measurements were carried out as described above. The DMA data are shown in Table 7.

**Table 7. DMA Data for Comparative Example 2**

| **Temperature (°C)** | **Complex Viscosity (Pa·s)** |
|---|---|
| 25.2 | 6,960 |
| 50.2 | 403 |
| 74.9 | 48.1 |
| 98.4 | 4.82 |

### Example 5

### Preparation of an Epoxy Blend

A mixture of 20 weight percent of Polymer Number 3 and 80 weight percent of EPON 828 is prepared by heating and stirring the combined materials at 150°C for 30 minutes. The mixture (8.00 g; 30 parts by weight), DPI (1.33 g; 5 parts by weight), and LM-10 (17.33 g; 65 parts by weight) are then mixed at 85°C using a Model DAC-100 mixer (available from Dantco Mixers Corporation, Paterson, New Jersey). DMA measurements are carried out as described above.

Various unforeseeable modifications and alterations to this invention will become apparent to those skilled in the art without departing from the scope and spirit of this invention. It should be understood that this invention is not intended to be unduly limited by the illustrative embodiments and examples set forth herein and that such examples and embodiments are presented by way of example only with the scope of the invention intended to be limited only by the claims set forth herein as follows.

## Claims

1. A composition comprising
(a) at least one branched copolymer comprising the reaction product of
(1) at least one ethylenically-unsaturated monomer,
(2) at least one N-substituted maleimide monomer,
(3) at least one crosslinker comprising at least two ethylenically-unsaturated functional groups,
(4) at least one free radical initiator, and
(5) at least one chain transfer agent, the mole ratio of crosslinker to chain transfer agent being less than 1.25 : 1 ;
and
(b) at least one thermosetting resin.

2. The composition of Claim 1, wherein said ethylenically-unsaturated monomer is selected from the group consisting of vinyl aromatics, vinyl ethers, vinyl esters, acryloyl- and methacryloyl-functional monomers, isobutene, and mixtures thereof.

3. The composition of Claim 1, wherein said ethylenically-unsaturated monomer is selected from those represented by the following general Formula I: 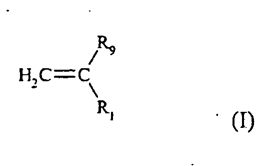 wherein:
-R₁ is 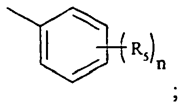 -OR₆;
-C(O)OR₇;
-OC(O)R₈;
-C=N; or
-CH₃;
-R₉ is -H or -CH₃;
-R₅ is a halogen, -OH, -OR₁₀, or -C(O)OH;
-R₆, -R₇, -R₈, and -R₁₀ are monovalent aromatic groups, monovalent alicyclic groups, or monovalent C₁ to C₁₈ g aliphatic groups; and
n is an integer of 0 to 5.

4. The composition of Claim 1, wherein said ethylenically-unsaturated monomer is selected from the group consisting of cyclohexyl vinyl ether, methyl vinyl ether, ethyl vinyl ether, isopropyl vinyl ether, n-butyl vinyl ether, isobutyl vinyl ether, hexadecyl vinyl ether, n-octadecyl vinyl ether, styrene, 2,3,4,5,6-pentafluorostyrene, 2-chlorostyrene, 2-bromostyrene, 4-vinylbenzoic acid, 9-vinylanthracene, 2-vinylnaphthalene, 2,4,6-trimethylstyrene, 4-methoxystyrene, 4-vinylbiphenyl, 3-vinyl toluene, 4-vinyl toluene, and mixtures thereof.

5. The composition of Claim 1, wherein said N-substituted maleimide monomer is selected from the group consisting ofN-phenylmaleimide, N-tolylmaleimide, N-cyclohexylmaleimide, N-methylmaleimide, N-ethylmaleimide, N-isopropylmaleimide, N-propylmaleimide, N-butylmaleimide, N-cyclopentylmaleimide, N-cyclobutylmaleimide, N-cycloheptylmaleimide, and mixtures thereof.

6. The composition of Claim 1, wherein said crosslinker is selected from the group consisting of divinyl aromatics, divinyl ethers, multifunctional maleimides, multifunctional acrylates and methacrylates, and mixtures thereof.

7. The composition of Claim 1, wherein said free radical initiator is selected from the group consisting of azo compounds, peroxides, hydroperoxides, peracids, peresters, thermal redox initiators, and mixtures thereof and wherein said chain transfer agent is selected from the group consisting of mercaptans, disulfides, carbon tetrabromide, carbon tetrachloride, cobalt chelates, oligomeric chain transfer agents, and mixtures thereof

8. The composition of Claim 1, wherein said thermosetting resin is selected from the group consisting of epoxy resins, maleimide resins, polycyanate ester resins, and mixtures thereof.

9. The composition of Claim 1 at least partially cured.

10. A substrate bearing a coating of the composition of Claim 9 on at least a portion of at least one major surface thereof.

11. An electronic component comprising the composition of Claim 9.

## Patentansprüche

1. Zusammensetzung, umfassend
(a) mindestens ein verzweigtes Copolymer, umfassend das Reaktionsprodukt von:
(1) mindestens einem ethylenisch ungesättigten Monomer,
(2) mindestens einem N-substituierten Maleinimidmonomer,
(3) mindestens einem Vernetzer mit mindestens zwei ethylenisch ungesättigten funktionellen Gruppen,
(4) mindestens einem radikalischen Initiator und
(5) mindestens einem Kettenübertragungsmittel, wobei das Molverhältnis von Vernetzer zu Kettenübertragungsmittel weniger als 1,25:1 beträgt;
und
(b) mindestens ein wärmehärtendes Harz.

2. Zusammensetzung nach Anspruch 1, wobei das ethylenisch ungesättigte Monomer aus der Gruppe bestehend aus Vinylaromaten, Vinylethern, Vinylestern, acryloyl- und methacryloylfunktionellen Monomeren, Isobuten und Mischungen davon ausgewählt ist.

3. Zusammensetzung nach Anspruch 1, wobei das ethylenisch ungesättigte Monomer unter denjenigen der folgenden allgemeinen Formel (I) ausgewählt ist: 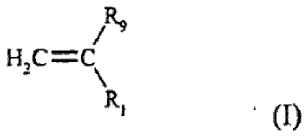 worin:
-R₁ für 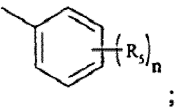 -OR₆; -C(O)OR₇; -OC(O)R₈; -C≡N oder -CH₃ steht;
-R₉ für -H oder -CH₃ steht;
-R₅ für ein Halogen, -OH, -OR₁₀ oder -C(O)OH steht;
-R₆, -R₇, -R₈ und -R₁₀ für einwertige aromatische Gruppen, einwertige alicyclische Gruppen oder einwertige aliphatische Gruppen mit 1 bis 18 C-Atomen stehen und
n für eine ganze Zahl von 0 bis 5 steht.

4. Zusammensetzung nach Anspruch 1, wobei das ethylenisch ungesättigte Monomer aus der Gruppe bestehend aus Cyclohexylvinylether, Methylvinylether, Ethylvinylether, Isopropylvinylether, n-Butylvinylether, Isobutylvinylether, Hexadecylvinylether, n-Octadecylvinylether, Styrol, 2,3,4,5,6-Pentafluorstyrol, 2-Chlorstyrol, 2-Bromstyrol, 4-Vinylbenzoesäure, 9-Vinylanthracen, 2-Vinylnaphthalin, 2,4,6-Trimethylstyrol, 4-Methoxystyrol, 4-Vinylbiphenyl, 3-Vinyltoluol, 4-Vinyltoluol und Mischungen davon ausgewählt ist.

5. Zusammensetzung nach Anspruch 1, wobei das N-substituierte Maleinimidmonomer aus der Gruppe bestehend aus N-Phenylmaleinimid, N-Tolylmaleinimid, N-Cyclohexylmaleinimid, N-Methylmaleinimid, N-Ethylmaleinimid, N-Isopropylmaleinimid, N-Propylmaleinimid, N-Butylmaleinimid, N-Cyclopentylmaleinimid, N-Cyclobutylmaleinimid, N-Cycloheptylmaleinimid und Mischungen davon ausgewählt ist.

6. Zusammensetzung nach Anspruch 1, wobei der Vernetzer aus der Gruppe bestehend aus Divinylaromaten, Divinylethem, multifunktionellen Maleinimiden, multifunktionellen Acrylaten und Methacrylaten und Mischungen davon ausgewählt ist.

7. Zusammensetzung nach Anspruch 1, wobei der radikalische Initiator aus der Gruppe bestehend aus Azoverbindungen, Peroxiden, Hydroperoxiden, Persäuren, Perestern, thermischen Redoxinitiatoren und Mischungen davon ausgewählt ist und das Kettenübertragungsmittel aus der Gruppe bestehend aus Mercaptanen, Disulfiden, Tetrabromkohlenstoff, Tetrachlorkohlenstoff, Cobaltchelaten, oligomeren Kettenübertragungsmitteln und Mischungen davon ausgewählt ist.

8. Zusammensetzung nach Anspruch 1, wobei das wärmehärtende Harz aus der Gruppe bestehend aus Epoxidharzen, Maleinimidharzen, Polycyanatesterharzen und Mischungen davon ausgewählt ist.

9. Zusammensetzung nach Anspruch 1, die zumindest teilweise gehärtet ist.

10. Substrat, das auf mindestens einem Teil mindestens einer seiner Hauptoberflächen eine Beschichtung aus der Zusammensetzung gemäß Anspruch 9 trägt.

11. Elektronisches Bauteil, umfassend die Zusammensetzung gemäß Anspruch 9.

## Revendications

1. Composition comprenant
(a) au moins un copolymère ramifié comprenant le produit de réaction de
(1) au moins un monomère à insaturation éthylénique,
(2) au moins un monomère maléimide N-substitué,
(3) au moins un agent de réticulation comprenant au moins deux groupes fonctionnels à insaturation éthylénique,
(4) au moins un initiateur de radicaux libres et
(5) au moins un agent de transfert de chaîne,
le rapport molaire de l'agent de réticulation à l'agent de transfert de chaîne étant inférieur à 1,25:1 ; et
(b) au moins une résine thermodurcissable.

2. Composition selon la revendication 1, dans laquelle ledit monomère à insaturation éthylénique est choisi parmi les composés aromatiques vinyliques, les éthers de vinyle, les esters vinyliques, les monomères à fonction acryloyle et méthacryloyle, l'isobutène et les mélanges de ceux-ci.

3. Composition selon la revendication 1, dans laquelle ledit monomère à insaturation éthylénique est choisi parmi ceux représentés par la formule générale I suivante : 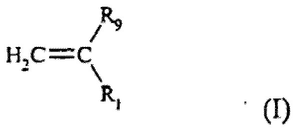 dans laquelle
-R₁ est 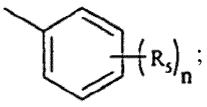 -OR₆ ; -C(O)OR₇ ; -OC(O)R₈ ; -C≡N ; ou -CH₃ ;
-R₉ est -H ou -CH₃ ;
-R₅ est un atome d'halogène, -OH, -OR₁₀ ou -C(O)OH ;
-R₆, -R₇, -R₈ et -R₁₀ sont des groupes aromatiques monovalents, des groupes alicycliques monovalents ou des groupes aliphatiques en C₁ à C₁₈ monovalents ; et
n est un nombre entier de 0 à 5.

4. Composition selon la revendication 1, dans laquelle ledit monomère à insaturation éthylénique est choisi parmi l'oxyde de cyclohexyle et de vinyle, l'oxyde de méthyle et de vinyle, l'oxyde d'éthyle et de vinyle, l'oxyde d'isopropyle et de vinyle, l'oxyde de n-butyle et de vinyle, l'oxyde d'isobutyle et de vinyle, l'oxyde d'hexadécyle et de vinyle, l'oxyde de n-octadécyle et de vinyle, le styrène, le 2,3,4,5,6-pentafluorostyrène, le 2-chlorostyrène, le 2-bromostyrène, l'acide 4-vinylbenzoïque, le 9-vinylanthracène, le 2-vinylnaphtalène, le 2,4,6-triméthylstyrène, le 4-méthoxystyrène, le 4-vinylbiphényle, le 3-vinyltoluène, le 4-vinyltoluène et les mélanges de ceux-ci.

5. Composition selon la revendication 1, dans laquelle ledit monomère maléimide N-substitué est choisi parmi le N-phénylmaléimide, le N-tolylmaléimide, le N-cyclohexylmaléimide, le N-méthylmaléimide, le N-éthylmaléimide, le N-isopropylmaléimide, le N-propylmaléimide, le N-butylmaléimide, le N-cyclopentylmaléimide, le N-cyclobutylmaléimide, le N-cycloheptylmaléimide et les mélanges de ceux-ci.

6. Composition selon la revendication 1, dans laquelle ledit agent de réticulation est choisi parmi les composés aromatiques divinyliques, les oxydes de divinyle, les maléimides multifonctionnels, les acrylates et méthacrylates multifonctionnels et les mélanges de ceux-ci.

7. Composition selon la revendication 1, dans laquelle ledit initiateur de radicaux libres est choisi parmi les composés azoïques, les peroxydes, les hydroperoxydes, les peracides, les peresters, les initiateurs redox thermiques et les mélanges de ceux-ci et dans laquelle ledit agent de transfert de chaîne est choisi parmi les thiols, les disulfures, le tétrabromure de carbone, le tétrachlorure de carbone, les chélates du cobalt, les agents de transfert de chaîne oligomères et les mélanges de ceux-ci.

8. Composition selon la revendication 1, dans laquelle ladite résine thermodurcissable est choisie parmi les résines époxydes, les résines de maléimide, les résines d'ester de type polycyanate et les mélanges de celles-ci.

9. Composition selon la revendication 1 au moins partiellement durcie.

10. Substrat portant un revêtement de la composition selon la revendication 9 sur au moins une partie d'au moins une surface principale de celui-ci.

11. Composant électronique comprenant la composition selon la revendication 9.
